# EUROPÄISCHE PATENTSCHRIFT

(11) **EP 0 685 378 B1**
(45) Veröffentlichungstag und Bekanntmachung des Hinweises auf die Patenterteilung: **12.08.1998**
(21) Anmeldenummer: 95107417.8
(22) Anmeldetag: 16.05.1995
(51) Int. Cl.: B62B 3/14, B62B 3/18

(54) **Stapelbarer Einkaufswagen**
Nestable shopping trolley
Chariot d'achat emboîtable

(30) Priorität: 01.06.1994 DE 9408921 U
(43) Veröffentlichungstag der Anmeldung: 06.12.1995
(73) Patentinhaber: WANZL METALLWARENFABRIK GMBH, D-89336 Leipheim (DE)
(72) Erfinder: Eberlein, Herbert, D-89347 Bubesheim (DE)

(56) Entgegenhaltungen:
- DE-A- 3 444 136
- DE-U- 9 404 262

## Beschreibung

Die Erfindung betrifft einen stapelbaren Einkaufswagen, mit einem Fahrgestell, mit einer Warentrageinrichtung, die an ihrem hinteren Ende von einer verschwenkbaren Rückwand begrenzt ist, mit einer Schiebeeinrichtung und mit einer im hinteren Bereich des Einkaufswagens vorgesehenen, aus einer Nichtgebrauchslage in eine Gebrauchslage und umgekehrt bewegbaren, mit einer Abstellfläche und mit einer Anschlageinrichtung ausgestatteten Ablage, die zur Aufnahme größerer Gegenstände bestimmt ist, wobei sich die Anschlageinrichtung quer zur Schieberichtung des Einkaufswagens erstreckt und nach oben gerichtet am hinteren Ende der Abstellfläche angeordnet ist. Einkaufswagen dieser Art sind in der

DE-A-3 444 136, in den europäischen Patentschriften EP 0 141 398, EP 0 254 210, EP 0 349 423 und EP 0 402 551 sowie in der deutschen Gebrauchsmusterschrift DE-U-85 00 639.4 näher beschrieben.

Es gibt Märkte, die ihre Getränke nicht in Getränkekisten, sondern in Schrumpfverpackungen anbieten, in welchen sich eine Anzahl Flaschen befinden. Mit den eingangs genannten Einkaufswagen ist es nicht möglich, z.B. schrumpfverpackte Flaschen oder auch andere größere Verkaufsgegenstände wie Waschmittelschachteln, Waschmittelflaschen, WC-Papier und dergleichen auf der Ablage zu transportieren, ohne riskieren zu müssen, daß diese Gegenstände von der Ablage herabfallen. Eine der Ursachen ist darin begründet, daß die Ablagen so konstruiert und gestaltet sind, daß diese sich im Grunde ausschließlich zum Tragen von Getränkekisten eignen, aus wenig Bauteilen zusammengesetzt sind und große Durchbrüche aufweisen, durch welche die anderen erwähnten Artikel hindurch oder neben der Ablage herabfallen können. Eine weitere, besonders wichtige Ursache ist darin erkennbar, daß bei allen bekannten Ablagen die am hinteren Ende der Abstellfläche befindliche Anschlageinrichtung mit etwa maximal 60 mm Höhe relativ niedrig ist. Natürlich reicht diese Höhe aus, um Getränkekisten sicher transportieren zu können. Zum Abstützen von beispielsweise aufrecht stehenden 1-Liter-Flaschenpackungen ist eine derartige Anschlageinrichtung jedoch viel zu niedrig. Als dritte Ursache, die die niedrige Höhe der Anschlageinrichtung rechtfertigt, ist schließlich anzuführen, daß höhere Anschlageinrichtungen den Stapelvorgang der eingangs genannten Einkaufswagen behindern würden, da die Warentrageinrichtung eines rückwärtigen Einkaufswagens an die Anschlageinrichtung der Ablage eines vorausbefindlichen Einkaufswagens anstoßen würde. Das bekannte und vorteilhafte Ineinanderschachteln der gewöhnlich korbartig ausgebildeten Warentrageinrichtungen der Einkaufswagen wäre nicht möglich.

Es ist deshalb Aufgabe der Erfindung, einen gattungsgemäßen Einkaufswagen so weiterzuentwickeln, daß die Anschlageinrichtung ausreichend hoch gestaltet werden kann, um z.B. schrumpfverpackte Flaschen, Schachteln, größere Verpackungen und dergleichen sicher mit der Ablage transportieren zu können und daß derart gestaltete Einkaufswagen weiterhin platzsparend stapelbar sind.

Die Lösung der Aufgabe besteht darin, daß die Anschlageinrichtung um eine quer zur Schieberichtung sich erstreckende Achse gegenüber der Abstallfläche begrenzt verschwenkbar gelagert ist und daß die Ablage am Einkaufswagen so angeordnet ist, daß beim Stapelvorgang zweier derartiger Einkaufswagen bei einer in Gebrauchslage befindlichen Ablage eines vorausbefindlichen Einkaufswagens zuerst deren Anschlageinrichtung und anschließend die Ablage selbst vom einzuschiebenden Einkaufswagen in die Nichtgebrauchslage bewegt wird.

Durch die Maßnahme, die Anschlageinrichtung um eine horizontale Achse schwenkbar anzuordnen, besteht ein erster Vorteil der Erfindung darin, daß die Höhe der Anschlageinrichtung fast so hoch gewählt werden kann, wie die in Schieberichtung des Einkaufswagens gemessene Tiefe der Abstellfläche beträgt. Diese Tiefe ist mit mindestens 150 mm anzusetzen. Die Höhe der Anschlageinrichtung kann also durchaus 140 mm oder mehr betragen.

Es ist klar, daß eine derart hohe Anschlageinrichtung imstande ist, z.B. eine aufrecht stehende Flaschenpackung, deren Flaschenhöhe etwa 320 mm mißt, vor dem Herabstürzen von der Ablage zu bewahren. Ein zweiter Vorteil besteht darin, daß die Anschlageinrichtung in ihrer Gebrauchslage so weit nach oben gerichtet ist, daß sie beim Stapelvorgang zweier Einkaufswagen bevorzugt in jenen Raum ragt, der beispielsweise von der Warentrageinrichtung eines rückwärtigen Einkaufswagens dann beansprucht wird, wenn dieser in einen vorausbefindlichen Einkaufswagen eingeschoben, also mit diesem gestapelt wird. Dadurch wird die Anschlageinrichtung beim Stapelvorgang automatisch in die Nichtgebrauchslage gedrückt. Wenn aber nun die gesamte Ablage am Einkaufswagen so angeordnet ist, daß beim Stapelvorgang immer zuerst die Anschlageinrichtung einer Ablage von einem rückwärtigen Einkaufswagen und erst dann die Ablage mit der bereits in Nichtgebrauchslage befindlichen Anschlageinrichtung von diesem rückwärtigen Einkaufswagen angestoßen wird, um ebenfalls in die Nichtgebrauchslage befördert zu werden, so ist der dritte Vorteil darin erkennbar, daß die Ablagen derart gestalteter Einkaufswagen in der Nichtgebrauchslage ebenfalls platzsparend so angeordnet sind, daß sich diese Einkaufswagen genauso platzsparend stapeln lassen, wie dies von den eingangs genannten, zum Stand der Technik zählenden Einkaufswagen her bekannt ist.

Die Erfindung wird anhand von vier Ausführungsbeispielen näher beschrieben, wobei bei jedem Ausführungsbeispiel die Ablage unterschiedlich gestaltet ist.

Die nachfolgend dargestellten und beschriebenen Einkaufswagen 1 stellen nur einen Teil jener Einkaufswagen 1 dar, bei denen die Erfindung anwendbar ist. Alle diese Einkaufswagen 1 weisen ein Fahrgestell 2 auf, das eine Warentrageinrichtung 8 in der bevorzugten Form eines Korbes oder allgemein eines Behältnisses trägt. Zu diesem Zweck weisen die Fahrgestelle 2 der Einkaufswagen 1 nach oben gerichtete oder gekrümmte Träger 3 auf, an welchen die Warentrageinrichtung 8 befestigt ist. Am hinteren Ende 6 der Einkaufswagen 1 ist eine Schiebeeinrichtung 7 vorgesehen, die entweder am Fahrgestell 2, oder wie üblich, an der Warentrageinrichtung 8 angeordnet ist. Eine aus Drahtgitter und/oder aus Kunststoff bestehende Rückwand 10, die das hintere Ende der Warentrageinrichtung 8 begrenzt, ist in bekannter Weise um eine oben liegende horizontale Achse 11 verschwenkbar gelagert, damit in ebenfalls bekannter Weise solche Einkaufswagen 1 platzsparend ineinandergeschoben, also gestapelt werden können. Sowohl die Warentrageinrichtung 8 als auch das Fahrgestell 2 sind deshalb entsprechend konisch, gewöhlich in Schieberichtung sich verjüngend gestaltet. Im hinteren Bereich 13 der Einkaufswagen 1 ist eine Ablage 14 vorgesehen, die zur Aufnahme größerer Gegenstände 23, wie Flaschenpackungen, Schachteln, Gebinde, usw. geeignet ist. Die Ablagen 14 lassen sich aus einer Nichtgebrauchslage, in der sie sich gewöhnlich unterhalb der Warentrageinrichtung 8 befinden, nach rückwärts in eine Gebrauchslage und umgekehrt bewegen. Beim Stapelvorgang mehrerer Einkaufswagen 1 werden in Gebrauchslage befindliche Ablagen 14 vom jeweils rückwärtig einzuschiebenden Einkaufswagen 1 von selbst in die Nichtgebrauchslage gedrückt.

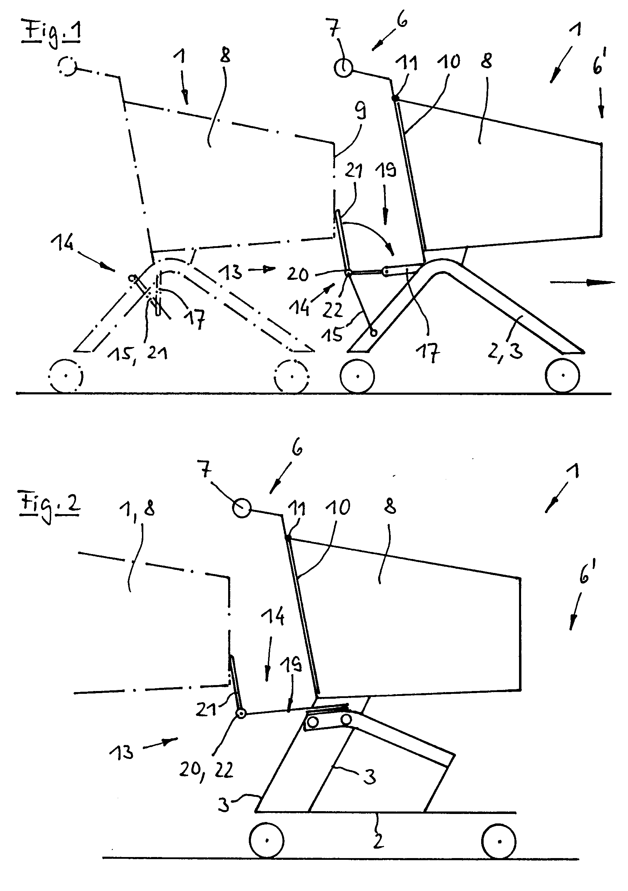

Bei dem in Fig. 1 dargestellten Einkaufswagen 1 ist die Ablage 14 so gestaltet, wie dies in der europäischen Patentschrift 0 141 398 beschrieben ist. Die Ablage 14 besteht aus einem Schwenkteil 15 und aus einem Halteteil 17. Am hinteren Ende 20 der Abstellfläche 19 der Ablage 14 ist eine Anschlageinrichtung 21 vorgesehen, die quer zur Schieberichtung (Pfeil) des Einkaufswagens 1 angeordnet ist. Die Anschlageinrichtung 21 ist um eine ebenfalls quer zur Schieberichtung des Einkaufswagens 1 sich erstreckende, horizontale Achse 22 begrenzt verschwenkbar gelagert. In Gebrauchslage ist die Anschlageinrichtung 21 nach oben gerichtet. In Nichtgebrauchslage liegt sie, in der Zeichnung nach rechts geschwenkt, auf der Abstellfläche 19 mehr oder weniger parallel zu dieser angeordnet auf. Die eben beschriebene Lagerung der Anschlageinrichtung 21, ihre Anordnung in der Gebrauchs- und Nichtgebrauchslage sowie ihre Bauweise, etwa in der bekannten Form eines U-förmigen Bügels, ist auch bei den nachfolgenden Ausführungsbeispielen gleich. Im Beispiel befindet sich die Ablage 14 in der nach rückwärts über den Grundriß der Warentrageinrichtung 8 hinausragenden Gebrauchslage. Die Abstellfläche 19 ist nach hinten geneigt und etwa rechtwinklig zur Rückwand 10 angeordnet. Strichpunktiert ist ein weiterer gleicher Einkaufswagen 1 dargestellt, der im Begriff ist, in den rechts abgebildeten, vorausbefindlichen Einkaufswagen 1 eingeschoben zu werden. Die nach oben gerichtete Anschlageinrichtung 19 ragt in jenen Raum, den die Warentrageinrichtung 8 des rückwärtigen, strichpunktiert gezeichneten Einkaufswagen 1 beim Stapelvorgang beansprucht. Die Stirnseite 9 der Warentrageinrichtung 8 des rückwärtigen Einkaufswagens 1 schlägt an der Anschlageinrichtung 21 des vorausbefindlichen Einkaufswagens 1 an. Ein Weiterschieben des rückwärtigen Einkaufswagens 1 bewirkt, daß die Anschlageinrichtung 21 auf die Abstellfläche 19 fallt. Der Abschluß des Stapelvorganges zweier Einkaufswagen 1 wird nachfolgend in Fig. 5 ausführlich beschrieben. Dies trifft auch für die in den Figuren 2 bis 4 gezeigten Einkaufswagen 1 zu.

Der in Fig. 2 gezeigte Einkaufswagen 1 orientiert sich an jenen Einkaufswagen 1, die in der DE-OS 34 48 335.7 oder in der EP 0 402 551 beschrieben sind. Am hinteren Ende 20 der Abstellfläche 19 ist die Anschlageinrichtung 21 angeordnet.

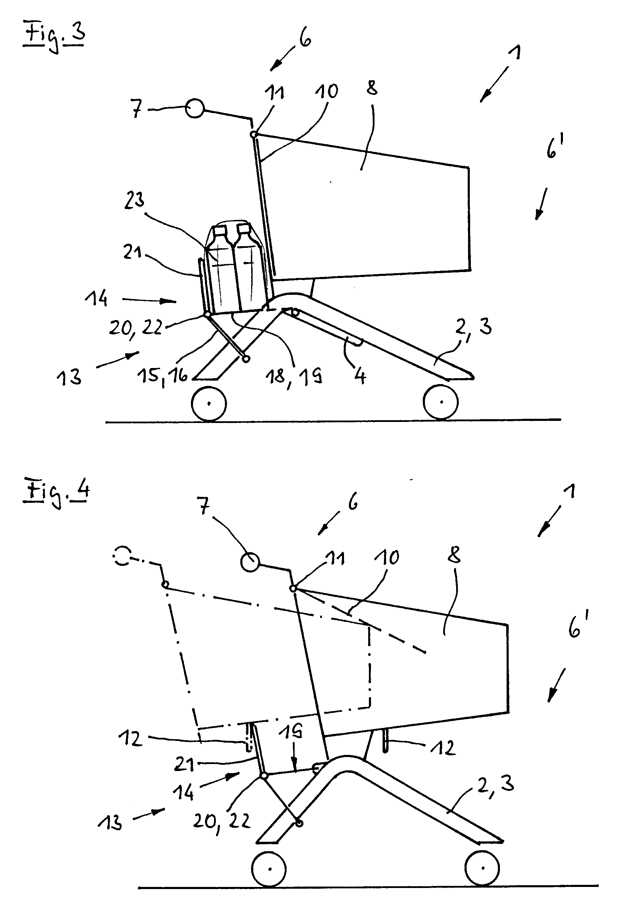

Der in Fig. 3 dargestellte Einkaufswagen 1 entspricht einem von der Firma Clares Equipment Großbritannien entwickelten Einkaufswagen 1. Ein Abstellteil 18 ist vorderendig in Führungen 4 schiebebeweglich gelagert und am hinteren Ende mit einem Schwenkteil 15 verbunden, dessen Stützen 16 am Fahrgestell 2 drehbeweglich gelagert sind. Am hinteren Ende 20 der Abstellfläche 19 befindet sich die Anschlageinrichtung 21. Auf der Abstellfläche 19 ist als Gegenstand 23 eine Flaschenpackung abgestellt.

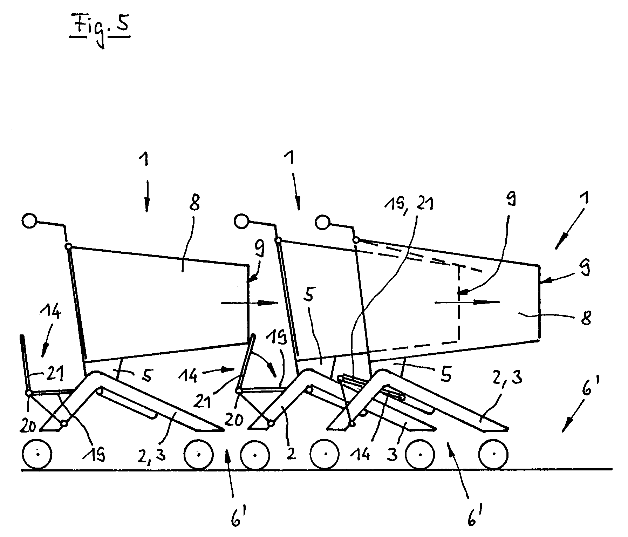

Bei dem in Fig. 4 dargestellten Einkaufswagen 1 ist die Ablage 14 so gestaltet, wie dies in der EP 0 254 210 vorgeschlagen wird. Die Anschlageinrichtung 21 ist wieder am hinteren Ende 20 der Abstellfläche 19 angeordnet. Strichpunktiert ist ein Teil eines rückwärtig einzuschiebenden Einkaufswagens 1 dargestellt. Unterhalb der Warentrageinrichtung 8 dieses Einkaufswagens ragt ein Vorsprung 12 nach unten, der dazu bestimmt ist, während des Stapelvorganges die Anschlageinrichtung 21 eines vorausbefindlichen Einkaufswagens 1 in die Nichtgebrauchslage zu drücken. Dieses Beispiel soll zeigen, daß auch ein anderes Teil als die Warentrageinrichtung 8 dazu bestimmt sein kann, beim Stapelvorgang zweier Einkaufswagen 1 die Anschlageinrichtung 21 eines vorausbefindlichen Einkaufswagens 1 in die Nichtgebrauchslage zu bewegen.

In Fig. 5 wird anhand eines Ablaufschemas gezeigt, wie eine erfindungsgemäße, in Gebrauchslage befindliche Ablage 14 von einem rückwärtigen einzuschiebenden Einkaufswagen 1 in die Nichtgebrauchslage bewegt wird. Aus Gründen einer deutlichen Darstellung ist für diesen Zweck der in Fig. 3 gezeigte Einkaufswagen 1 ausgewählt worden. Der gleiche Ablauf läßt sich analog auch auf die übrigen hier beschriebenen Einkaufswagen 1 übertragen.
Es sind drei gleiche Einkaufswagen 1 dargestellt. Beim links abgebildeten Einkaufswagen 1 befindet sich die nach rückwärts herausgeschwenkte Ablage 14 in der Gebrauchslage. Die Anschlageinrichtung 21 ragt nach oben. Bei dem in der Mitte dargestellten Einkaufswagen 1 befindet sich die Ablage 14 ebenfalls in Gebrauchslage. Allerdings stößt die Warentrageinrichtung 8 des linken Einkaufswagens 1 gerade an die Anschlageinrichtung 21 des mittleren Einkaufswagens 1 an und drückt dessen Anschlageinrichtung 21 nach unten auf die Abstellfläche 19. Die Abstellfläche 19 oder auch die Ablage 14 des mittleren Einkaufswagens 1 hat mit Ausnahme der Anschlageinrichtung 21 in dieser Phase ihre Lage noch nicht verändert. Bei dem rechts dargestellten Einkaufswagen 1 befindet sich die Anschlageinrichtung 21 bereits komplett in der Nichtgebrauchslage. Sie liegt an der Abstellfläche 19 auf. Der mittlere Einkaufswagen 1 ist im Gegensatz zum links abgebildeten Einkaufswagen 1 bereits teilweise in den rechts dargestellten Einkaufswagen 1 eingeschoben. Die Ablage 14 ist so angeordnet, daß Teile des Fahrgestelles 2 des mittleren Einkaufswagens 1, etwa die Träger 3 oder allgemein am Fahrgestell 2 befindliche Anschläge 5 an der Ablage 14 des rechten Einkaufswagens 1 anliegen und begonnen haben, die Ablage 14 zusammen mit der bereits in Nichtgebrauchslage befindlichen Anschlageinrichtung 21 in die endgültige Nichtgebrauchslage zu bewegen, in der die Ablage 14 bevorzugt unterhalb der Warentrageinrichtung 8 angeordnet ist. Wäre die Anschlageinrichtung 8 starr oder ortsfest am hinteren Ende 20 der Abstellfläche 19 angeordnet, die Einkaufswagen 1 könnten nicht gestapelt werden, da sich die Anschlageinrichtungen 21 den Warentrageinrichtungen 8 sperrend in den Weg stellen würden. Anhand der Zeichnung kann dieser nachteilige Effekt leicht nachvollzogen werden. So aber wird eine nach oben gerichtete Anschlageinrichtung 21 beim Stapelvorgang erst in eine Nichtgebrauchslage gebracht, in der sie dann den eigentlichen Vorgang, die Ablage 14 in die Nichtgebrauchslage zu bewegen ebenso wenig behindert, wie das Ineinanderschachteln der Warentrageinrichtungen8 der einzelnen Einkaufswagen 1. Es soll nicht unerwähnt bleiben, daß jene Teile (Stirnseite 9 der Warentrageinrichtung 8 oder Vorsprung 12), welche beim Stapelvorgang die Anschlageinrichtung 21 eines vorausbefindlichen Einkaufswagens 1 in die Nichtgebrauchslage bewegen, näher am vorderen Ende 6' des Einkaufswagens 1 angeordnet sind, als jene Teile (Träger 3, Anschläge 5) des Fahrgestelles 2, die dazu bestimmt sind, die Ablage 14 eines vorausbefindlichen Einkaufswagens 1 nebst abgeklappter Anschlageinrichtung 21 in die Nichtgebrauchslage zu bewegen.
Will man die Ablage 14 benützen, muß man zuerst die Abstellfläche 19 in die Gebrauchslage bringen und anschließend die Anschlageinrichtung 21 in eine nach oben gerichtete Gebrauchslage schwenken, sofern letzteres nicht mit Hilfe von Federkraft von selbst bewerkstelligt wird.

## Patentansprüche

1. Stapelbarer Einkaufswagen (1), mit einem Fahrgestell (2), mit einer Warentrageinrichtung (8), die an ihrem hinteren Ende (6) von einer verschwenbkaren Rückwand (10) begrenzt ist, mit einer Schiebeeinrichtung (7) und mit einer im hinteren Bereich (13) des Einkaufswagens (1) vorgesehenen, aus einer Nichtgebrauchslage in eine Gebrauchslage und umgekehrt bewegbaren, mit einer Abstellfläche (19) und mit einer Anschlageinrichtung (21) ausgestatteten Ablage (14), die zur Aufnahme größerer Gegenstände (23) bestimmt ist, wobei sich die Anschlageinrichtung (21) quer zur Schieberichtung des Einkaufswagens erstreckt und nach oben gerichtet am hinteren Ende (20) der Abstellfläche angeordnet ist, dadurch **gekennzeichnet,** daß die Anschlageinrichtung (21) um eine quer zur Schieberichtung sich erstreckende Achse (22) gegenüber der Abstellfläche (19) begrenzt verschwenkbar gelagert ist und daß die Ablage (14) am Einkaufswagen (1) so angeordnet ist, daß beim Stapelvorgang zweier Einkaufswagen (1) bei einer in Gebrauchslage befindlichen Ablage (14) eines vorausbefindlichen Einkaufswagens (1) zuerst deren Anschlageinrichtung (21) und anschließend die Ablage (14) selbst vom einzuschiebenden Einkaufswagen (1) in die Nichtgebrauchslage bewegt wird.

2. Stapelbarer Einkaufswagen, nach Anspruch 1, dadurch **gekennzeichnet,** daß die Anschlageinrichtung (21) in Nichtgebrauchslage auf der Abstellfläche (19) der Ablage (14) aufliegt.

3. Stapelbarer Einkaufswagen nach Anspruch 1 oder 2, dadurch **gekennzeichnet,** daß beim Stapelvorgang die Anschlageinrichtung (21) eines vorausbefindlichen Einkaufswagens (1) von der Warentrageinrichtung (8) oder von einem unterhalb der Warentrageinrichtung (8) befindlichen Vorsprung (12) eines rückwärtigen Einkaufswagens (1) in die Nichtgebrauchslage bewegt wird.

4. Stapelbarer Einkaufswagen nach einem der Ansprüche 1 bis 3, dadurch **gekennzeichnet,** daß beim Stapelvorgang die Ablage (14) eines vorausbefindlichen Einkaufswagens (1) durch Teile (3, 5) des Fahrgestelles (2) eines rückwärtigen Einkaufswagens (1) in die Nichtgebrauchslage bewegt wird.

5. Stapelbarer Einkaufswagen nach einem der Ansprüche 1 bis 4, dadurch **gekennzeichnet,** daß jene Teile (9, 12) welche die Anschlageinrichtung (21) eines vorausbefindlichen Einkaufswagens (1) in die Nichtgebrauchslage bewegen, näher am vorderen Ende (6') des Einkaufswagens (1) angeordnet sind als jene Teile (3, 5) des Fahrgestelles (2), die dazu bestimmt sind, die Ablage (14) mit abgeklappter Anschlageinrichtung (21) eines vorausbefindlichen Einkaufswagens (1) in die Nichtgebrauchslage zu bewegen.

## Claims

1. A stackable shopping trolley (1), having a chassis (2), having a goods carrying arrangement (8) whose rear end (6) is bounded by a pivotable rear wall (10), having a pushing arrangement (7) and having a rack (14) which is provided in the rear region (13) of the shopping trolley (1), is movable from an out-of-use position into an in-use position and vice-versa, is provided with a depositing surface (19) and with a stop arrangement (21) and is for receiving relatively large objects (23), the stop arrangement (21) extending transversely to the advancing direction of the shopping trolley and being arranged at the rear end (20) of the depositing surface in an upwards directed manner, characterised in that the stop arrangement (21) is mounted so as to be pivotable to a limited extent - about an axis (22) extending transversely to the advancing direction - with regard to the depositing surface (19), and in that the rack (14) is arranged on the shopping trolley (1) in such a manner that when stacking two shopping trolleys (1) and when a rack (14) of a front shopping trolley (1) is located in the in-use position, first the stop arrangement (21) thereof and then the rack (14) itself are moved into the out-of-use position by the shopping trolley (1) to be pushed in.

2. A stackable shopping trolley in accordance with Claim 1, characterised in that in the out-of-use position, the stop arrangement (21) rests on the depositing surface (19) of the rack (14).

3. A stackable shopping trolley in accordance with Claim 1 or 2, characterised in that during stacking, the stop arrangement (21) of a front shopping trolley (1) is moved into the out-of-use position by the goods carrying arrangement (8) of a rear shopping trolley (1) or by a projection (12), located below the goods carrying arrangement (8), of a rear shopping trolley (1).

4. A stackable shopping trolley in accordance with any one of Claims 1 to 3, characterised in that during stacking, the rack (14) of a front shopping trolley (1) is moved into the out-of-use position by parts (3, 5) of the chassis (2) of a rear shopping trolley (1).

5. A stackable shopping trolley in accordance with any one of Claims 1 to 4, characterised in that those parts (9, 12) which move the stop arrangement (21) of a front shopping trolley (1) into the out-of-use position are arranged closer to the front end (6') of the shopping trolley (1) than those parts (3, 5) of the chassis (2) which are for moving the rack (14), with downwards-folded stop arrangement (21), of a front shopping trolley (1) into the out-of-use position.

## Revendications

1. Chariot à provisions emboîtable (1), avec un châssis (2), avec un dispositif porteur de marchandises (8), qui est délimité à son extrémité arrière (16) par une cloison arrière pivotante (10), avec un dispositif de poussée (7) et avec un casier (14), qui est prévu dans la région arrière (13) du chariot à provisions (1), qui peut être déplacé d'une position de non utilisation dans une position d'utilisation et vice-versa, qui est doté d'une surface de rangement (19) et d'un moyen de butée (21), et qui est destiné à recevoir des objets (23) de relativement grande taille, le moyen de butée (21) s'étendant transversalement à la direction de poussée du chariot à provisions et étant disposé à l'extrémité arrière (20) de la surface de rangement en étant dirigé vers le haut, **caractérisé** en ce que le moyen de butée (21) est monté avec une possibilité limitée de pivotement par rapport à la surface de rangement (19) autour d'un axe (22) s'étendant transversalement à la direction de poussée, et en ce que le casier (14) est disposé sur le chariot à provisions (1) de telle sorte que, lors de l'opération d'emboîtement de deux chariots à provisions (1), le casier (14) d'un chariot à provisions (1) placé en avant se trouvant en position d'utilisation, c'est d'abord le moyen de butée (21) de ce casier, puis le casier (14) proprement dit, qui sont déplacés en position de non utilisation par le chariot à provisions (1) à emboîter.

2. Chariot à provisions emboîtable selon la revendication 1, **caractérisé** en ce que le moyen de butée (21), en position de non utilisation, repose sur la surface de rangement (19) du casier (14).

3. Chariot à provisions emboîtable selon la revendication 1 ou 2, **caractérisé** en ce que, lors de l'opération d'emboîtement, le moyen de butée (21) d'un chariot à provisions (1) placé en avant est déplacé en position de non utilisation par le dispositif porteur de marchandises (8) d'un chariot à provisions (1) placé en arrière, ou par une saillie (12) se trouvant en dessous du dispositif porteur de marchandises (8).

4. Chariot à provisions emboîtable selon une des revendications 1 à 3, **caractérisé** en ce que, lors de l'opération d'emboîtement, le casier (14) d'un chariot à provisions (1) placé en avant est déplacé en position de non utilisation par des éléments (3, 5) du châssis (2) d'un chariot à provisions (1) arrière.

5. Chariot à provisions emboîtable selon une des revendications 1 à 4, **caractérisé** en ce que les éléments (9, 12) qui déplacent en position de non utilisation le moyen de butée (21) d'un chariot à provisions (1) placé en avant sont disposés plus près de l'extrémité avant (6') du chariot à provisions (1) que les éléments (3, 5) du châssis (2) qui sont destinés à déplacer en position de non utilisation le casier (14), avec le moyen de butée (21) rabattu, d'un chariot à provisions (1) placé en avant.
